# EUROPEAN PATENT SPECIFICATION

(11) **EP 2 377 984 B1**
(45) Date of publication and mention of the grant of the patent: **08.05.2013**
(21) Application number: 11003624.1
(22) Date of filing: 05.03.2008
(51) Int. Cl.: D06F 37/22

(54) **Balancer and drum washing machine having the same**
Ausgleichsregler und Trommelwaschmaschine damit
Compensateur et machine à laver à tambour disposant de celui-ci

(30) Priority: 19.04.2007 KR 20070038518
(43) Date of publication of application: 19.10.2011
(62) Divisional of application: 08152296.3
(73) Proprietor: Samsung Electronics Co., Ltd., Suwon-si, Gyeonggi-do, 443-742 (KR)
(72) Inventor: Jung, Yang Jo, Suwon-si Gyeonggi-do (KR); Hoh, Jung Eui, Suwon-si Gyeonggi-do (KR)
(74) Representative: Grünecker, Kinkeldey, Stockmair & Schwanhäusser

(56) References cited:
- EP-A- 0 808 932
- EP-A1- 0 810 317
- EP-A1- 1 983 089
- WO-A-02/08636
- WO-A-97/16657
- US-A- 5 829 318
- US-A- 5 850 748

## Description

### BACKGROUND

### 1. Field

Embodiments relate to a drum washing machine, and more particularly, to a drum washing machine having ball balancers for rapidly reducing the vibration of a drum.

### 2. Description of the Related Art

Generally, drum washing machines are apparatuses, which wash laundry by the difference in elevation caused by lifting the laundry and then dropping the laundry. Each of these drum washing machines includes a tub for containing water, and a drum rotatably installed in the tub.

In a drum washing machine, a drum horizontally disposed is rotated in a clockwise direction and a counterclockwise direction alternately. When the drum is rotated, laundry vertically moves along the inner circumferential surface of the drum together with washing water, thus being washed and dehydrated.

In the above conventional washing machine, when the drum is rotated so as to wash and dehydrate the laundry, an unbalanced weight is generated due to the eccentric structure of the drum itself and the partial disposition of the laundry in the drum. One example is know from EP 0 805 932 A1. When the unbalanced weight is generated during the rotation of the drum, the drum is inevitably vibrated. Thus, a balancer for rapidly reducing the vibration is installed at one side of the drum.

Here, the balancer includes a plurality of masses having a designated weight so as to exhibit a balancing function, and a housing forming an internal space so as to guide the movement of the plurality of masses. Further, the internal space of the housing is filled with a fluid for assisting the proper movement of the masses and preventing the collision of the masses so as to reduce the vibration generated by the movement of the masses.

That is, in the conventional drum washing machine, the drum is rotated under the condition that the dynamic balance of the drum is not maintained due to the unbalanced weight. At this time, the masses move to a position symmetrically opposite to the unbalanced weight, and thus balance the drum, thereby reducing the vibration of the drum generated due to the unbalanced weight.

The masses and the fluid perform a circular movement and a centrifugal movement along the housing of the balancer. When an interval between the masses and the housing is large, noise is generated due to the centrifugal movement of the masses and the amount of the fluid filling the housing is increased.

Further, when the interval between the masses and the housing is small, the movement of the masses is disturbed and it is difficult to achieve a rapid balancing effect.

### SUMMARY

Therefore, one object of embodiments is to provide a drum washing machine having ball balancers, which adjust a proper interval between masses and a housing so as to effectively reduce the vibration of a drum.

This object is solved by the features of claim 1.

Advantageous embodiments are disclosed by the subclaims.

In accordance with one aspect of embodiments, the inside of the race is filled with a fluid for reducing noise caused by the circumferential movement of the masses.

In accordance with another aspect of embodiments, the race has a ring shape.

In accordance with another aspect of embodiments, a gap (d) between the masses and the housing is maintained to approximately 2 millimeters.

In accordance with another aspect of embodiments, balancers are respectively provided on the front and rear surfaces of the drum such that the balancers are concentric with the drum.

In accordance with another aspect of embodiments, a value obtained by dividing the radius (rs) of the corner portions by the radius (R) of the masses is between 0.4 and 0.9.

### BRIEF DESCRIPTION OF THE DRAWINGS

These and/or other aspects, features, and advantages will become apparent and more readily appreciated from the following description of exemplary embodiments, taken in conjunction with the accompanying drawings in which:
FIG. 1 is a schematic sectional view of a drum washing machine of an exemplary embodiment;
FIG. 2 is a partial sectional view of a balancer of the drum washing machine of FIG. 1;
FIG. 3 is a cross-sectional view of the balancer of the drum washing machine of FIG. 1; and
FIG. 4 is a graph illustrating the relation between a time to drop masses in a race, when the balancer of an exemplary embodiment falls, and an interval between the masses and the race.

### DETAILED DESCRIPTION OF EMBODIMENTS

Reference will now be made in detail to exemplary embodiments, an example of which is illustrated in the accompanying drawings, wherein like reference numerals refer to like elements throughout. Exemplary embodiments are described below by referring to the annexed drawings.

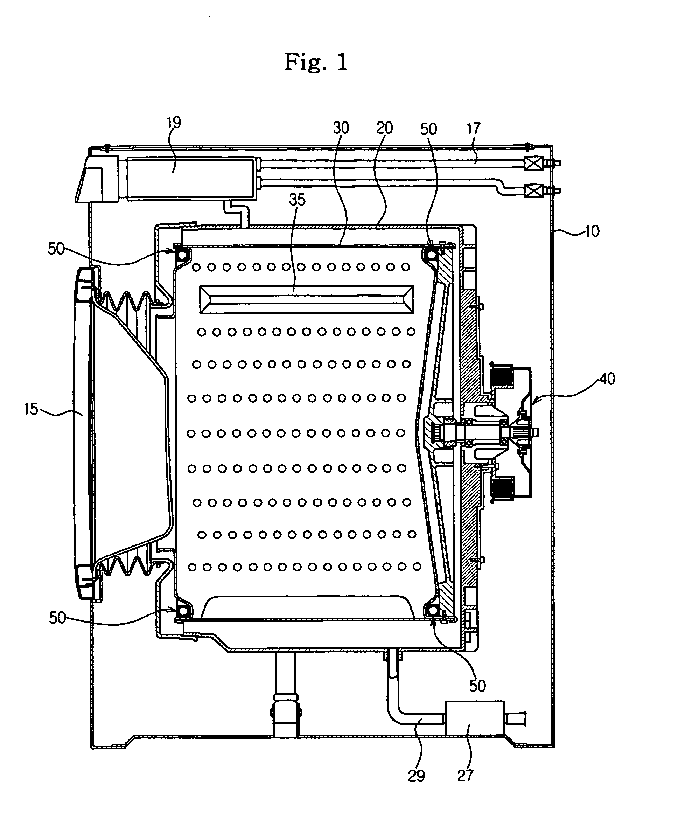

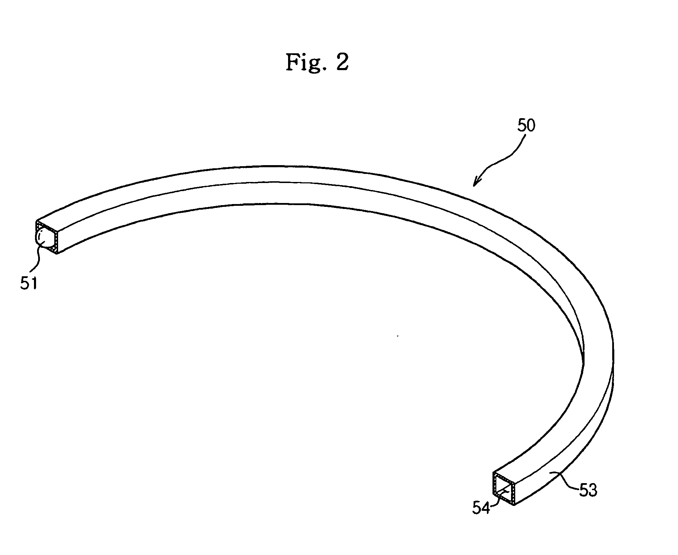

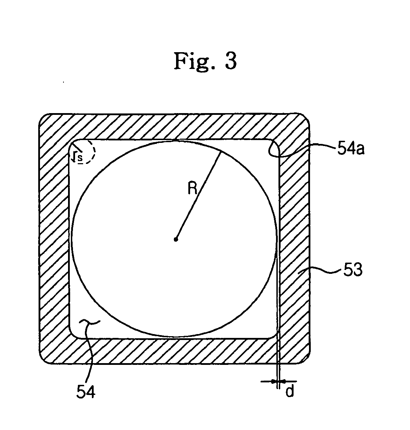

FIG. 1 is a schematic sectional view of a drum washing machine in accordance with an exemplary embodiment, FIG. 2 is a partial sectional view of a balancer of the drum washing machine of FIG. 1, and FIG. 3 is a cross-sectional view of the balancer of the drum washing machine of FIG. 1.

First, with reference to FIG. 1, an exemplary embodiment of a drum washing machine includes a main body 10 forming the external appearance of the washing machine, a tub 20 installed in the main body 10 for storing washing water when the washing of laundry is carried out, and a drum 30 rotatably installed in the tub 20.

A door 15 for opening and closing openings of the tub 20 and the drum 30 so as to put laundry into the drum 30 is installed on the front or upper surface of the main body 10. Here, 'L' represents laundry.

A water supply pipe 17 for supplying washing water to the tub 20 and a detergent supply device 19 for supplying a detergent to the tub 20 are installed in the upper portion of the main body 10. Here, the detergent supply device 19 forms an internal space containing the detergent, and is installed in the front surface of the main body 10 so as to allow a user to easily put the detergent thereinto.

A drain pump 27 and a drain pipe 29 for discharging the washing water contained in the tub 20 to the outside of the main body 10 are installed in the lower portion of the main body 10.

A driving unit 40 for transmitting power to the drum 30 so as to rotate the drum 30 is provided on the rear surface of the drum 30. Lifters 35 for lifting laundry to the upper portion of the drum 30 and then dropping the laundry so as to wash the laundry when the drum 30 is rotated by the driving unit 40 are provided at regular intervals on the inner circumferential surface of the drum 30.

Balancers 50, each of which has a ring shape and is concentric with the center of rotation of the drum 30, are respectively installed on the front and rear surfaces of the drum 30. The balancers 50 serve to rapidly reduce the vibration of the drum 30 generated by the unbalanced weight due to the eccentric structure of the drum 30 and the partial disposition of the laundry in the drum 30 when the drum 30 is rotated.

As shown in FIGS. 2 and 3, each of the balancers 50 includes a plurality of masses 51, and a housing 53 configured such that the plurality of masses 51 in the housing 53 is movable in a circumferential direction.

In an exemplary embodiment, the masses 51 have a spherical shape, and are provided in the housing 53, as described above.

A race 54, in which the masses 51 are movable in the circumferential direction, is prepared in the housing 53. The race 54 has a rectangular section. Corner portions 54a of the race 54 having the rectangular section are rounded. The housing 53 is made of a material obtained by injection, a material obtained by die casting, or a metal panel.

The inside of the race 54 is filled with a fluid having viscosity so as to reduce noise generated when the masses 51 move in the race 54. The fluid flows along spaces between the race 54 and the masses 51. Particularly, in an exemplary embodiment, most of the fluid flows through the corner portions 54a of the race 54. The momentums of the masses 51 are determined by the viscosity of the fluid.

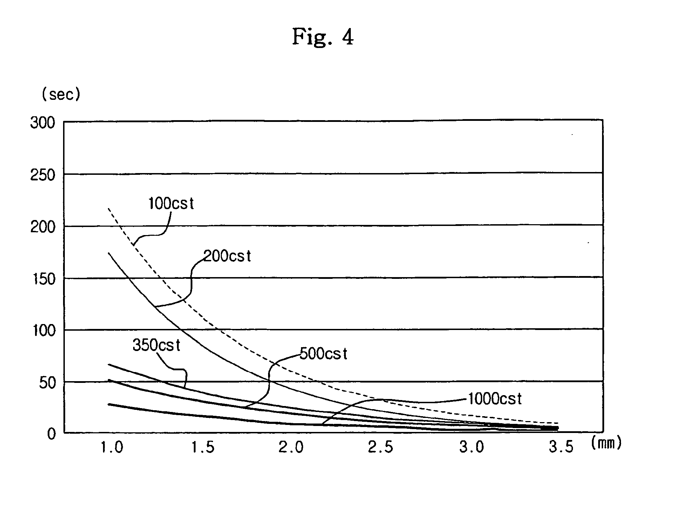

Accordingly, in an exemplary embodiment, as a result of the repetition of a test in which the viscosity of the fluid filling the race 54 of the ball balancer 50 is adjusted, the momentums of the masses 51 were obtained as shown in a graph of FIG. 4.

A horizontal axis of the graph in FIG. 4 represents an interval in millimeters (d; with reference to FIG. 3) between the masses 51 and the inner wall of the race 54, and a vertical axis of the graph represents a time (seconds) to drop the masses 51 in the race 54 when the balancer 50 of an exemplary embodiment falls from a designated height. In this test, the masses 51 having a diameter of 19.05 millimeters (mm) were used. Each curve represents tests conducted in fluids having different viscosities in units of centistokes (cst).

The shorter the time to drop the masses 51 in the race 54 is, the larger the momentums of the masses 51 are. The graph of FIG. 4 shows that when the interval (d) (millimeters) between the masses 51 and the inner wall of the race 54 is more than 1.5 millimeters, the momentums of the masses 51 according to the respective viscosities are large.

However, when the race 54 is machined, tolerance occurs. Further, in the case that the interval (d) between the masses 51 and the inner wall of the race 54 is increased more than a designated value, noise is generated when the masses 51 move. Accordingly, it is determined that the momentums of the masses 51 are optimized when the interval (d) between the masses 51 and the inner wall of the race 54 is approximately (about) 2 millimeters.

When the interval (d) between the masses 51 and the inner wall of the race 54 is approximately 2 millimeters, as described above, the ratio of a space between the masses 51 and the corner portions 54a of the race 54, that is, a value obtained by dividing the radius (rs) of the corner portions 54a by the radius (R) of the masses 51, is between 0.4 and 0.9 (0.4< rs/R <0.9).

Accordingly, in accordance with an exemplary embodiment, the balancer 50 has a value, obtained by the radius (rs) of the corner portions 54a by dividing the radius (R) of the masses 51, which is between 0.4 and 0.9. Thus, the balancer 50 of an exemplary embodiment minimizes the collision between the masses 51 and the race 54, while minimizing the interval between the masses 51 and the inner wall of the race 54 so as to use a small amount of the fluid, thereby effectively reducing vibration generated from the drum 30.

Further, the balancer 50 maintains the movement of the masses 51, while minimizing the interval between the masses 51 and the inner wall of the race 54 so as to use a small amount of the fluid, thereby reducing noise generated due to collision of the masses 51.

As apparent from the above description, an exemplary embodiment provides a drum washing machine with ball balancers having a value, obtained by dividing the radius of corner portions of a race by the radius of masses, which is between 0.4 and 0.9, thus effectively reducing vibration generated from a drum while using a small amount of a fluid.

Although a few exemplary embodiments have been shown and described, it would be appreciated by those skilled in the art that changes may be made in these exemplary embodiments, the scope of which is defined in the claims and their equivalents.

## Claims

1. A drum washing machine, comprising:
a main body (10);
a tub (20) installed in the main body (10) to receive water therein;
a drum (30) rotatable by receiving a rotational force from a driving unit (40);
a balancer (50) having a ring-shaped housing (53) coupled to the drum (30) and including viscous fluid and a plurality of balls (51) disposed and movable within a race (54) of the ring-shaped housing (53) of the balancer (50),
**characterized in that** the ring-shaped housing (53) of the balancer (50) has a cross section providing an internal rectangular space in which the viscous fluid can flow to internal corner portions (54a) thereof when the balls (51) are moving therein during the rotation of the drum (30),
the internal corner portions (54a) of the internal rectangular space of the balancer being rounded,
a diameter of the balls (51) is about 19.05mm, and
the balls (51) and the inside wall of the race (54) has a gap (d), which is more than 1.5mm up to about 2mm.

2. The drum washing machine according to claim 1, wherein the gap (d) is about 2mm.

3. The drum washing machine according to claim 1, **characterized in that** balancers (50) are respectively provided on the front and rear surfaces of the drum (30) such that the balancers (50) are concentric with the drum (30).

4. The drum washing machine according to claim 1, wherein a value obtained by dividing the radius of the corner portions (54a) of the race (54) by the radius of the balls (51) is between 0.4 and 0.9.

5. The drum washing machine according to claim 1, wherein the drum (30) includes a ring-shaped recess provided along an outer circumferential edge of the drum (30) and the balancer (50) is installed in the ring-shaped recess.

## Patentansprüche

1. Trommelwaschmaschine, die umfasst:
ein Hauptgehäuse (10);
einen Laugenbehälter (20), der in dem Hauptgehäuse (10) installiert ist, um Wasser darin aufzunehmen;
eine Trommel (30), die gedreht werden kann, indem sie eine Drehkraft von einer Antriebseinheit (40) empfängt;
eine Ausgleichseinrichtung (50), die ein ringförmiges Gehäuse (53) aufweist, das mit der Trommel (30) gekoppelt ist, und die viskoses Fluid sowie eine Vielzahl von Kugeln (51) enthält, die in einem Laufring (54) des ringförmigen Gehäuses (53) der Ausgleichseinrichtung (50) angeordnet sind und darin bewegt werden können,
**dadurch gekennzeichnet, dass** das ringförmige Gehäuse (53) der Ausgleichseinrichtung (50) einen Querschnitt hat, durch den ein rechteckiger Innenraum gebildet wird, in dem das viskose Fluid zu Inneneckenabschnitten (54a) fließen kann, wenn sich die Kugeln (51) darin während der Drehung der Trommel (30) bewegen,
die Inneneckenabschnitte (54a) des rechteckigen Innenraums der Ausgleichseinrichtung abgerundet sind,
ein Durchmesser der Kugeln (51) ungefähr 19,05 mm beträgt, und
die Kugeln (51) und die Innenwand des Laufrings (54) einen Zwischenraum (d) aufweisen, der mehr als 1,5 mm bis ungefähr 2 mm groß ist.

2. Trommelwaschmaschine nach Anspruch 1, wobei der Zwischenraum (d) ungefähr 2 mm groß ist.

3. Trommelwaschmaschine nach Anspruch 1, **dadurch gekennzeichnet, dass** Ausgleichseinrichtungen (50) jeweils an der vorderen und der hinteren Fläche der Trommel (30) so vorhanden sind, dass die Ausgleichseinrichtungen (50) konzentrisch zu der Trommel (30) sind.

4. Trommelwaschmaschine nach Anspruch 1, wobei ein Wert, der ermittelt wird, indem der Radius der Eckenabschnitte (54a) des Laufrings (54) durch den Radius der Kugeln (51) dividiert wird, zwischen 0,4 und 0,9 liegt.

5. Trommelwaschmaschine nach Anspruch 1, wobei die Trommel (30) eine ringförmige Vertiefung enthält, die an einem Außenumfangsrand der Trommel (30) vorhanden ist, und die Ausgleichseinrichtung (50) in der ringförmigen Vertiefung installiert ist.

## Revendications

1. Machine à laver à tambour, comprenait :
un corps principal (10),
un bac (20) installé dans le corps principal (10) pour y recevoir de l'eau,
un tambour (30) pouvant tourner en recevant une force de rotation provenant d'une unité d'entraînement (40),
un dispositif d'équilibrage (50) possédant un logement en forme de bague (53) accouplé au tambour (30) et incluant un fluide visqueux et une pluralité de billes (51) placées et mobile à l'intérieur d'un roulement (54) du logement en forme de bague (53) du dispositif d'équilibrage (50),
**caractérisé en ce que** le logement en forme de bague (53) du dispositif d'équilibrage (50) présente une section transversale fournissant un espace en forme d'espace rectangulaire interne dans lequel le fluide visqueux peut s'écouler vers des parties internes en forme de coins (54a) de celui-ci lorsque les billes (51) se déplacent dans celui-ci pendant la rotation du tambour (30),
les parties internes en forme de coins (54a) de l'espace rectangulaire interne du dispositif'd'équilibrage étant arrondies,
le diamètre des billes (51) est environ de 19,05 mm, et
les billes (51) et la paroi intérieure du roulement (54) présentent un intervalle (d) qui est supérieur à 1,5 mm jusqu'à environ 2 mm.

2. Machine à laver à tambour selon la revendication 1, dans laquelle l'intervalle (d) est environ de 2 mm.

3. Machine à laver à tambour selon la revendication 1, **caractérisée en ce que** des dispositifs d'équilibrage (50) sont prévus respectivement sur les surfaces avant et arrière du tambour (30) de telle sorte que les dispositifs d'équilibrage (50) soit concentriques avec le tambour (30).

4. Machine à laver à tambour selon la revendication 1, dans laquelle la valeur obtenue en divisant le rayon des parties en forme de coins (54a) du roulement (54) par le rayon des billes (51) est comprise entre 0,4 et 0,9.

5. Machine à laver à tambour selon la revendication 1, dans laquelle le tambour (30) inclut un évidement en forme de bague prévu le long d'un bord circonférentiel externe du tambour (30), et le dispositif d'équilibrage (50) est installé dans l'évidement en forme de bague.
